# EUROPÄISCHE PATENTSCHRIFT

(11) **EP 2 841 349 B1**
(45) Veröffentlichungstag und Bekanntmachung des Hinweises auf die Patenterteilung: **09.03.2016**
(21) Anmeldenummer: 13729587.9
(22) Anmeldetag: 23.04.2013
(51) Int. Cl.: B65D 39/08, B29C 45/14

(54) **METALLISCHER SPUNDVERSCHLUSS MIT KUNSTSTOFFSCHUTZSCHICHT**
METALLIC BUNG CLOSURE WITH PROTECTIVE PLASTIC LAYER
BONDE MÉTALLIQUE POURVUE D'UNE COUCHE PROTECTRICE EN MATIÈRE PLASTIQUE

(30) Priorität: 23.04.2012 DE 202012004201 U
(43) Veröffentlichungstag der Anmeldung: 04.03.2015
(73) Patentinhaber: Mauser-Werke GmbH, 50321 Brühl (DE)
(72) Erfinder: WEYRAUCH, Detlev, 52372 Kreuzau-Untermaubach (DE)
(86) Internationale Anmeldenummer: PCT/EP2013/001220
(87) Internationale Veröffentlichungsnummer: WO 2013/159913

(56) Entgegenhaltungen:
- EP-A1- 0 806 369
- WO-A1-2009/064032
- CN-U- 201 882 374
- DE-A1- 19 837 343
- DE-C1- 3 505 426
- JP-A- H04 239 448
- US-A- 4 195 750
- US-A- 5 709 313

## Beschreibung

Die Erfindung betrifft einen Spundverschluss zum gas- und flüssigkeitsdichten Verschließen einer Spundöffnung mit Innengewinde eines Behälters, insbesondere eines Stahlfasses zur Lagerung und zum Transport von insbesondere gefährlichen flüssigen Füllgütern, in Form eines napfförmigen Grundkörpers aus Metall mit einem scheibenförmigen Boden und einem sich daran anschließenden, nach oben offenen rohrförmigen Ringteil, an dem außenseitig ein Außengewinde vorgesehen ist, wobei innerhalb des napfförmigen Grundkörpers wenigstens ein Formschlusselement in Gestalt eines geformten Blechstreifens oder einer Lasche vorgesehen ist zum Ansetzen eines Schraubwerkzeugs zum Ein- und Ausschrauben des Spundverschlusses in die Spundöffnung des Behälters.

Bisher übliche Spundverschlüsse für Stahl-Spundfässer sind vollständig aus Metall gefertigt und an sich allgemein bekannt. Ein derartiger Spundverschluss ist z. B. aus der Druckschrift US 7,287,662 bekannt. Die Problematik dieses bekannten Spundverschlusses besteht darin, dass er bei gewissen Anwendungen zum dauerhaften Schutz gegen Korrosion auf der unteren, mit dem aggressiven Füllgut in Kontakt kommenden Seite einschließlich des Außengewindes mit einer besonderen chemikalienbeständigen Phenolbeschichtung versehen sein muss. Diese spezielle Farbbeschichtung kann jedoch leicht bei mehrmaliger Auf- und Zuschrauben der Spundverschlüsse abgerieben werden, wobei zum einen der Farbabrieb dann in das Füllgut fällt und dieses verunreinigt, und andererseits die Abriebstellen im Gewinde zu dünn oder gar nicht mehr beschichtet sind, so dass sich dort Korrosion ausbildet und die Verschluss-Stopfen teilweise sehr fest sitzen bzw. regelrecht festrosten.

Die gleiche Problematik wird in der japanischen Druckschrift JP H04 239448 A beschrieben. Bei dem daraus bekannten Spundverschluss aus Metall ist auf der Außenseite des rohrförmigen Ringteiles ein entsprechend massives Außengewinde eingeformt. Um eine Staub- und Abriebbildung beim Ein- und Ausschrauben des Spundverschlusses zu minimieren, ist eine hauchdünne besondere Beschichtung auf das Innengewinde des behälterseitigen Spundstutzens und ebenso auf das Außengewinde des Spundverschlusses aufgetragen. Diese dünne Beschichtung besteht aus einer mit Phenol modifizierten Epoxy Harz Komposition und einem olefinischen Hydrocarbon mit ausgezeichneten Schmiereigenschaften. Dadurch wird verhindert, dass das metallische Gewinde des Spundstutzens in direkten Kontakt mit dem metallischen Gewinde des Spundverschlusses kommt, so dass kein metallischer Abrieb in das Innere des Behälters fallen kann. Auch hier besteht die Gefahr, dass die dünne Beschichtung selbst abgerieben wird.

Die Schraubgewinde der Spundverschlüsse müssen zudem eine hohe Passgenauigkeit und geringe Toleranzen aufweisen, um mit vergleichsweise geringen Anzugsdrehmomenten absolut dicht verschlossen in die Spundstutzen einschraubbar zu sein.

In der Veröffentlichung DE 35 05 426 C1 ist ein klassischer Spundstopfen aus Vollkunststoff mit Außengewinde für Spundbehälter mit entsprechendem Innengewinde im Spundstutzen der Einfüll- und Entleerungsöffnung beschrieben. Auf der Oberseite des Spundstopfens ist eine übliche Vertiefung zum Einsetzen eines Schraubschlüssels vorgesehen. Am oberen Rand dieser Vertiefung ist ein dünner Metallring zur Versteifung des Kunststoff-Stopfens eingearbeitet. Dieser Metallring soll zur Vertiefung hin wirkende Verformungskräfte aufnehmen und abstützen und somit eine unerwünscht hohe Undichtigkeit verursachende Verformung des Kunststoff-Stopfens vermeiden. Grundsätzlich haben Kunststoff-Stopfen den Nachteil, dass die aus der Seitenwandung der Vertiefung zum Einsetzen des Schraubschlüssels hervorstehenden Nocken durch die Übertragung hoher Drehmomente sehr schnell abnutzen und bei hohen Belastungen "abschmieren" und völlig versagen können. Dieser nachteilige Effekt wird bei dem aus der DE 35 05 426 C1 bekannten Spundverschluss aus Vollkunststoff noch verstärkt, da das Kunststoffmaterial hinter den Nocken für die Ringnut zum Einlegen des Metallringes entfernt wurde, so dass dort keine Verbindung mehr zum Voll-Kunststoffmaterial des Spundstopfens besteht und die Nocken dadurch noch weniger Halt in der Vertiefung haben. Der eingesetzte Metallring mag eine Ovalisierung des Stopfens vermindern können, aber bei der Übertragung von Drehmomenten kann er nicht mithetfen, sondern wirkt somit eher zusätzlich schwächend und störend.

Spundbehälter, wie insbesondere Stahlfässer, die z. B. in der Chemischen Industrie zur Lagerung und zum Transport von gefährlichen flüssigen Füllgütern (Chemikalien) eingesetzt werden, müssen üblicherweise eine amtliche Bauartprüfung bestanden haben. Bei dieser Prüfung wird ein Behälter verschiedenen Tests unterzogen, wie z. B. Innendrucktest, Stauchdrucktest und Falltest, dies auch bei tiefen Temperaturen. Diese Kältetests werden bei -20° C durchgeführt, wobei der Behälter mit einer unterkühlten Flüssigkeit gefüllt ist, die einen hohen Anteil an Frostschutzmittel enthält. Bei diesen Prüftests werden die Spundverschlüsse u. a. auch hinsichtlich ihrer Dichtigkeit hohen Belastungen ausgesetzt.

Es ist daher Aufgabe der vorliegenden Erfindung, die Nachteile des Standes der Technik zu überwinden und einen neuartigen, in der Herstellung kostengünstigen Spundverschluß für Spundbehälter anzugeben, der insbesondere für eine Verwendung für aggressive flüssige Füllgüter mit absolut hoher Rostschutzeigenschaft (ohne zusätzliche Beschichtung mit Rostschutzfarbe) ausgestattet ist. Dabei soll der neue Spundverschluß zugleich auch erhöhte Sicherheitsaspekte und eine Schutzfunktion für einen Brandfall (Feuer- bzw. Hitzebeeinträchtigung) aufweisen.

Diese Aufgabe wird erfindungsgemäß mit den Merkmalen des Patentanspruches 1 gelöst. Die Unteransprüche beinhalten vorteilhafte Ausgestaltungsformen des erfindungsgemäßen Spundverschlusses. Die verbesserten Eigenschaften hinsichtlich Rostschutz und den Sicherheitsaspekten wie die Schutzfunktion im Brandfalle (als Berstsicherung) werden nachfolgend erläutert und beschrieben.

Dadurch, dass der Spundverschluß einen napfförmigen Grundkörper aus Metall mit einem scheibenförmigen Boden und ein sich daran anschließendes, nach oben offenes rohrförmiges Ringteil aufweist, wobei auf der Außenseite des Ringteiles eine Kunststoffschicht aufgetragen ist, in welche - zum Einschrauben des Spundverschlusses in die Spundöffnung im Spundstutzen des Stahlfasses - ein entsprechendes Außengewinde eingeformt ist, wird die gleiche Stabilität und Festigkeit wie bei einem üblichen Stahl-Spundverschluß gewährleistet. Im Gegensatz zu den üblichen Spundverschlüssen aus Stahl, in die in einem aufwändigen zusätzlichen Arbeitsgang ein Außengewinde eingerollt oder mit Materialabtragung eingeschnitten werden muss, weist der vorliegende erfindungsgemäße Spundverschluß auf der Außenseite des rohrförmigen Ringteiles eine stabile Kunststoffschicht auf, in welche das Außengewinde eingeformt ist. Dadurch wird der erfindungsgemäße Spundverschluß auch leichter als herkömmliche Stahl-Spundstopfen.

Zur Herstellung der erfindungsgemäßen "Composite - Spundverschlüsse" wird einfach der napfförmige Grundkörper als Metall-Rohling in eine Spritzgussform eingesetzt, wonach - wenigstens auf die Außenseite des Ringteiles - eine Kunststoffschicht aufgespritzt wird, in welche durch entsprechende Formvorgabe auf der Innenseite der Spritzgussform ein entsprechendes Außengewinde eingeformt wird. Als Kunststoff-material kann HD-PE (High Density Polyethylen), Nylon oder bevorzugt PP (Polypropylen) zum Einsatz kommen. Die Schichtdicke der aufgespritzten KunststoffSchicht beträgt einschließlich des Gewindes etwa 2 mm bis 5 mm, wobei das Außengewinde als Feingewinde oder bei dickerer Kunststoff-Schicht als Grobgewinde ausgeführt sein kann, je nach Kundenbedarf in standardisierter US-Version oder EP-Version.

Bei den herkömmlichen Stahl-Spundverschlüssen müssen die Gewinde von Spundverschluß und Spundstutzen sehr präzise und in engen Toleranzbereichen mit dadurch bedingten hohen Ausschußraten bei der Herstellung gefertigt werden. Der erfindungsgemäße Spundverschluß, bei dem das Außengewinde in die aufgespritzte Kunststoffschicht eingearbeitet ist, verzeiht kleine Ungenauigkeiten in der Gewindeausführung des Spundverschlusses, die durch die elastische Nachgiebigkeit des Kunststoff-Gewindes ausgeglichen werden können. Von daher können die Toleranzbereiche etwas größer und die Passgenauigkeit etwas kleiner sein.

Der erfindungsgemäße Spundverschluß weist gegenüber den bisher verwendeten herkömmlichen Stahl-Spundverschlüssen einen ganz gravierenden Vorteil auf. In einem Brandfalle, wenn die Fässer einer direkten Flammeneinwirkung ausgesetzt sind und durch die Hitzeentwicklung mit Temperatur- und Druckanstieg im flüssigen Füllgut die große Gefahr besteht, dass die Stahlfässer durch Überdruck platzen - sozusagen explodieren - und gefährliche umweltschädliche Chemikalien austreten können, dient der erfindungsgemäße Spundverschluß als Sicherheitselement bzw. Überdruckventil, da das Kunststoffmaterial der aufgespritzten Kunststoffschicht mit dem eingeformten Gewinde bei erhöhten Temperaturen erweicht und schließlich durch den im Faßinneren entstehenden Überdruck aus den Spundstutzen herausgedrückt wird, wobei das Gewinde dann sozusagen in Axialrichtung "abschmiert", wodurch der Spundverschluß nach oben aus der Spundöffnung herausgedrückt wird und der gefährliche Überdruck - ohne explosionsartige Zerstörung des Behälters - aus diesem entweichen kann und das gefährliche flüssige Füllgut im Behälter verbleibt. Dabei wird durch den stark temperaturleitfähigen napfförmigen Metall-Grundkörper eine schnellere Aufwärmung und Erweichung der dünnen Kunststoff-Gewindeschicht erzielt als vergleichsweise bei einem Vollkunststoff-Stopfen.

In Ausgestaltung der Erfindung ist eine zweiteilige Ausbildung des erfindungsgemäßen Spundverschlusses vorgesehen, bei welcher der obere, nicht mit dem Füllgut in Kontakt kommende Teil aus Metall, vorzugsweise Stahl, und der untere mit dem Füllgut in Kontakt kommende Teil aus Kunststoff besteht. Der neuartige sogenannte Composite-Spundverschluß zeichnet sich demnach konstruktiv durch eine neue Material-Struktur aus, bei der die Vorteile eines bekannten Vollkunststoff-Stopfens mit denen eines Vollstahl-Stopfens vereint sind.

Dadurch, dass auf die gesamte Außenfläche - in Normalposition die nach unten weisende Oberfläche - des napfförmigen Grundkörpers (= Metallrohling) mit dem scheibenförmigen Boden und dem rohrförmigen Ringteil eine durchgehende dichte Kunststoffschicht aufgetragen ist, in welche auf der Außenseite des Ringteiles das Außengewinde eingeformt ist, wird die vorteilhafte Konstruktion eines neuen Composite-Spundverschlusses geschaffen, die bewirkt, dass ein möglicherweise gegen Metall aggressives Füllgut (Säure) nicht mehr mit dem aus Metall bestehenden napfförmigen Grundkörper in Kontakt kommt. Die Kunststoffschicht, welche die zum Fassinneren weisende Unterseite des napfförmigen Grundkörpers überdeckt, kann vergleichsweise sehr dünn ausgebildet sein, um die Funktion eines Rostschutz-Überzuges zu erfüllen. Der napfförmige aus Metall bzw. Stahl bestehende Grundkörper des erfindungsgemäßen Composite-Spundverschlusses kann insgesamt dünner ausgebildet werden, wobei dennoch der große Vorteil beibehalten wird, dass der Abfüller und auch der Endkunde keine Änderung der Handhabung und Abfüll- bzw. Entnahme-Automatik an den vorhandenen Abfüll- und Entnahme-Anlagen vornehmen muß. Üblicherweise werden die bisherigen Stahl-Spundverschlüsse in den automatischen Abfüllanlagen der Großchemie mit magnetischen Greifwerkzeugen eines Schraubautomaten direkt vor dem Abfüllvorgang aus den leer angelieferten Behältern - zumeist Stahl-Spundfässer (tight head steel drums) - herausgeschraubt, von dem Greifwerkzeug festgehalten und direkt nach dem Abfüllvorgang von den Magnetschraubern wieder gas- und flüssigkeitsdicht in die Spundöffnungen der Stahlfässer eingeschraubt. Diese Magnetschrauber kommen auch oft bei größeren Endkunden zur Füllgutentnahme zum Einsatz.

Dabei sind die optimalen Anzugsmomente der Magnetschrauber in Abhängigkeit von Form und Material der jeweiligen Dichtung (z. B. Rund-Dichtung, Rechteck-Dichtung) frei vorwähl- und einstellbar. Je nach Aggressivität des zu transportierenden Füllgutes wird ein entsprechendes chemikalienresistentes Material (EVOH, Viton o. ä.) für die Dichtung ausgewählt.

In vorteilhafter Ausgestaltung kann oberhalb des Außengewindes dicht unterhalb des oberen Flanschrandes des metallischen Grundkörpers eine mitangespritzte Dichtungslippe in die äußere Kunststoffschicht integriert sein. Diese mitangespritzte Dichtungslippe kann auch aus einem anderen Kunststoffmaterial als die Basis-Kunststoffschicht bestehen und im Zwei-Komponenten-Spritzverfahren angeformt sein. Dadurch kann dann das Aufsetzen einer separaten Dichtung eingespart werden.

Für eine feste Verbindung von Kunststoff auf Metall ist wenigstens das rohrförmige Ringteil außenseitig auf der Kontaktfläche zu der äußeren Kunststoffschicht mit einer aufgerauhten Oberfläche (z. B. Riffelung, Anätzung) versehen, wodurch die aufgespritzte Kunststoffschicht eine formschlußartige Verbindung mit der Metalloberfläche eingeht. Dadurch können auch hohe Drehmomente übertragen werden, ohne dass die Gefahr besteht, dass die dünne Kunststoffschicht sich von dem metallischen Grundkörper ablösen könnte.

Weiterhin ist in einfacher Ausgestaltung der Erfindung vorgesehen, dass in den napfförmigen Grundkörper des erfindungsgemäßen Spundverschlusses - genauso wie bei herkömmlichen Stahl-Spundverschluß - innerhalb des napfförmigen Grundkörpers auf der Außenseite (Oberfläche) des scheibenförmigen Bodens in an sich bekannter Weise ein Formschlußelement in Gestalt eines geformten Blechstreifens mit außenseitigen Formschluß-Bögen aufgeschweißt ist. Das Formschlußelement dient zum Ansetzen der Schraubwerkzeuge.

Eine andere Ausgestaltung der Erfindung sieht dafür vor, dass innerhalb des napfförmigen Grundkörpers an zwei sich diametral gegenüberliegenden Seiten aus dem scheibenförmigen Boden jeweils ein integriertes Formschlußelement in Gestalt eines nach oben gebogenen Blechstreifens als Anschlagselement für den üblichen Schraubschlüssel für Spundverschlüsse ausgeformt ist. Dadurch kann das bekannte engeschweißte Formschlußelement in Gestalt des speziell geformten Blechstreifens mit außenseitigen Formschluß-Bögen vollständig eingespart werden. Die aufwendige Herstellung sowie der Einschweißvorgang des separaten Bauteiles entfallen vollständig. Der Fertigungsvorgang der erfindungsgemäßen integrierten formschlüssigen Anschlags-elemente erfolgt unmittelbar bei Formgebung (Stanzen, Pressen, Drücken, Tiefziehen) des metallischen napfförmigen Grundkörpers durch einen Stanzvorgang für die beiden zungenförmig oder laschenförmig hochgebogenen Blechstreifen. Zu deren fixierenden Abstützung und zum Verschließen der dadurch entstandenen Aussparung in dem scheibenförmigen Boden und ggfs. Rand des napfförmigen Grundkörpers sind die beiden integrierten Formschlußelemente bzw. hochgebogenen Blechstreifenlaschen in Richtung des rohrförmigen Ringteiles vollständig dicht mit Kunststoff hinterspritzt, wobei diese Hinterspritzung dann ein integriertes Teil der durchgehenden dichten Kunststoffschicht unterhalb des scheibenförmigen Bodens ist.

In bevorzugter Ausgestaltung der Erfindung ist vorgesehen, dass innerhalb des napfförmigen Grundkörpers an wenigstens zwei sich diametral gegenüberliegenden Seiten aus dem rohrförmigen Ringteil und teilweise aus dem scheibenförmigen Boden jeweils ein integriertes Formschlußelement in Gestalt einer nach oben und innen gebogenen Blechlasche ausgeformt ist, die an ihrem oberen Ende fest mit dem rohrförmigen Ringteil bzw. dem oberen Flanschrand und an ihrem unteren Ende fest mit dem scheibenförmigen Boden verbunden ist. Die durch das Herausdrücken der Blechlaschen entstandenen Aussparungen im rohrförmigen Ringteil bzw. im scheibenförmigen Boden des metallischen Grundkörpers werden formschlüssig und vollständig dicht mit hineinragendem Kunststoffmaterial der äußeren rohrförmigen bzw. unteren scheibenförmigen Kunststoffschicht ausgefüllt. Fertigungstechnisch zeichnet sich die Herstellung des erfindungsgemäßen zweiteiligen Spundverschlusses dadurch aus, dass ein napfförmiger Grundkörper (= Rohling) aus Metall mit scheibenförmigem Boden und sich daran anschließenden, nach oben offenen rohrförmigen Ringteil mit integrierten Formschlußelementen in Gestalt von herausgedrückten bogenförmigen Metallaschen vorgeformt wird und danach ein dazu passendes napfförmiges Kunststoffteil mit ebenfalls scheibenförmigem Boden und einem sich daran anschließenden, nach oben offenen rohrförmigen Ringteil mit Außengewinde in einer Spritzgußform vorgefertigt wird, wonach das napfförmige Kunststoffteil über den napfförmigen Metall-Grundkörper gestülpt und über eine Schnapp/Rast-Verbindung mit entsprechenden Hinterschnitten im rohrförmigen Ringteil unlösbar fest eingerastet und verbunden wird.

Diese vorteilhafte Ausgestaltungsform läßt sich fertigungstechnisch (weniger Bauteile) nicht nur einfach und kostengünstiger herstellen, es können auch hohe Drehmomente übertragen werden, ohne dass die Gefahr einer Ablösung der 6 Schweißpunkte des bekannten, separat eingeschweißten Formschlußelementes besteht. Durch den Wegfall des eingeschweißten Blechstreifens ist die Oberfläche des scheibenförmigen Bodens des metallischen napfförmigen Grundkörpers sehr glatt, dadurch könnten in vorteilhafter Weise z. B. auch einfache Schraubwerkzeuge mit pneumatischem Saughalter (Unterdruck) zum Einsatz kommen. Natürlich kann der napfförmige Metall-Grundkörper auch als Einlegeteil in einer entsprechenden Spritzguß-Form zur Ausbildung des äußeren napfförmigen Kunststoffteils hinterspritzt werden.

Die Erfindung wird nachfolgend anhand von in den Zeichnungen dargestellten Ausführungsbeispielen näher erläutert und beschrieben. Es zeigen :
- Figur 1: einen erfindungsgemäßen Spundverschluß in perspektivischer Ansicht,
- Figur 2: eine andere bevorzugte Ausführung des erfindungsgemäßen Spundverschlusses in perspektivischer Ansicht,
- Figur 3: den metallischen napfförmigen Grundkörper des Spundverschlusses gemäß Fig. 2,
- Figur 4: das äußere napfförmige Kunststoffteil des Spundverschlusses gemäß Fig. 2,
- Figur 5: eine Draufsicht auf den metallischen napfförmigen Grundkörper,
- Figur 6: eine perspektivische Ansicht von unten auf das äußere napfförmige Kunststoffteil,
- Figur 7: eine Seitenansicht des Spundverschlusses gemäß Fig. 2,
- Figur 8: eine Querschnittsdarstellung gemäß Schnittlinie A-A in Fig. 7 und
- Figur 9: einen Teilausschnitt des Spundverschlusses gemäß Schnittlinie B-B in Fig. 5

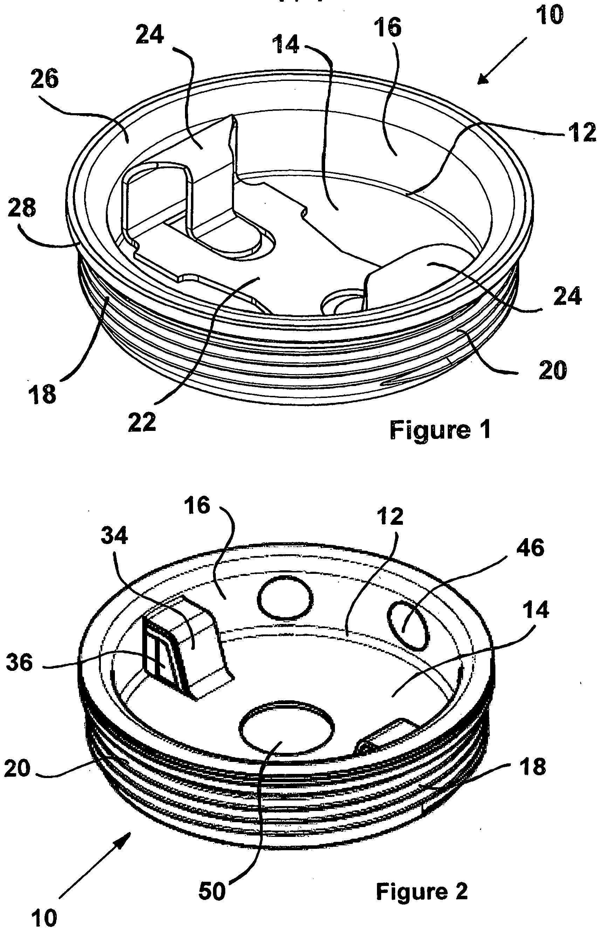

In Figur 1 ist mit der Bezugsziffer 10 ein erfindungsgemäßer Spundverschluß bezeichnet, der einen napfförmigen Grundkörper 12 aus Metall mit einem scheibenförmigen Boden 14 und einem sich daran anschließenden, nach oben offenen rohrförmigen Ringteil 16 mit oberem Flanschrand 26 aufweist, wobei auf der Außenseite des Ringteiles 16 eine rohrförmige Kunststoffschicht 18 aufgetragen ist, in welche - zum Einschrauben des Spundverschlusses 10 in die Spundöffnung im Spundstutzen eines Stahlfasses - ein entsprechendes Außengewinde 20 eingeformt ist. Bei dem zweiteiligen Strukturaufbau des erfindungsgemäßen Spundverschlusses 10 besteht der obere Teil mit napfförmigem Grundkörper 12 und eingeschweißtem Formschlußelement 22 - wie bei üblichen Stahl-Spundstopfen - nach wie vor aus Metall bzw. Stahl, während der untere, mit dem Füllgut in Kontakt kommende Teil nun aus Kunststoff besteht. Das Kunststoffmaterial besteht vorzugsweise aus HDPE (High Density Polyethylen), kann aber genauso gut aus einem anderen geeigneten Kunststoff wie z. B. Nylon oder Polypropylen (PP) ausgewählt sein.

Der metallische Grundkörper 12 mit eingeschweißtem Formschlußelement 22 und den beiden Formschluß-Bögen 24 für den Einsatz eines entsprechenden Werkzeugschlüssels läßt weiterhin eine übliche Handhabung mit Magnet-Schraubern zu.

Auf der anderen Seite kommt bei dem erfindungsgemäßen zweiteiligen Composite-Spundverschluß das flüssige Füllgut nur noch mit der aufgespritzten Kunststoffschicht 18, 30 und nicht mehr mit dem rostanfälligen metallischen Grundkörper in Kontakt. Dadurch kann auf eine aufwendige kostenintensive Spezialbeschichtung z. B. als Korrosionsschutz des metallischen Grundkörpers verzichtet werden. Für die nicht mit dem aggressiven Füllgut in Kontakt kommende obere Seite (Oberfläche) des Composite-Spundverschlusses genügt eine einfache Verzinkung oder Farblackierung gegen normale Umwelteinflüsse (Regen, Sonne, Wind). Bei dieser Ausführungsvariante ist oberhalb des Kunststoff-Außengewindes 20 und direkt unterhalb des oberen metallischen Flanschrandes 26 ein separater Dichtungsring 28 vorgesehen.

Figur 2 zeigt eine andere bevorzugte Ausgestaltung der Erfindung, bei der innerhalb des napfförmigen Grundkörpers 12 zwei sich diametral gegenüberliegende integrierte Formschlußelemente 34 für den Einsatz eines Werkzeugschlüssels vorgesehen sind, die aus dem scheibenförmigen Boden 14 durch einen Stanzvorgang als zungenförmig nach oben gebogene Blechstreifen ausgeformt sind. Dadurch wird der bekannte, speziell geformte und mit sechs Scheißpunkten eingeschweißte Blechstreifen 22 mit außenseitigen Formschluß-Bögen 24 vollständig eingespart. Die aufwendige Herstellung sowie der Einschweißvorgang des separaten Bauteiles 22 entfallen damit vollständig.

Der Fertigungsvorgang der erfindungsgemäßen integrierten Formschlußelemente 34 erfolgt unmittelbar bei Formgebung (Stanzen, Pressen, Drücken, Tiefziehen) des metallischen napfförmigen Grundkörpers 12 z. B. durch einen Stanzvorgang für die beiden u-förmigen hochgebogenen Blechstreifen. Zu deren Abstützung und zum dichten Verschließen der dadurch entstandenen Aussparung in dem scheibenförmigen Boden 14 des napfförmigen Grundkörpers 12 sind die beiden integrierten Formschluß-elemente 34 bzw. hochgebogenen Blechstreifen in Richtung des rohrförmigen Ringteiles 16 mit Kunststoff hinterspritzt, wobei diese Hinterspritzung dann ein integriertes Hinterfüllungsteil 36 der durchgehenden dichten Kunststoffschicht 30 unterhalb des scheibenförmigen Bodens14 ist.

Diese vorteilhafte Ausgestaltungsform mit integrierten Formschlußelementen läßt sich fertigungstechnisch (weniger Bauteile) nicht nur einfach und kostengünstig herstellen, es können auch hohe Drehmomente übertragen werden, ohne dass die Gefahr einer Ablösung der Schweißpunkte des eingeschweißten separaten (bekannten) Formschlußelementes besteht. Durch den Wegfall des eingeschweißten bekannten Blechstreifens ist die Oberfläche des scheibenförmigen Bodens des metallischen napfförmigen Grundkörpers 12 glatt und eben ohne Unebenheiten durch den aufgeschweißten bekannten Blechstreifen, dadurch könnten in vorteilhafter Weise auch einfache automatische Schraubwerkzeuge mit z. B. pneumatischem Saughalter (Unterdruck) zum Einsatz kommen.

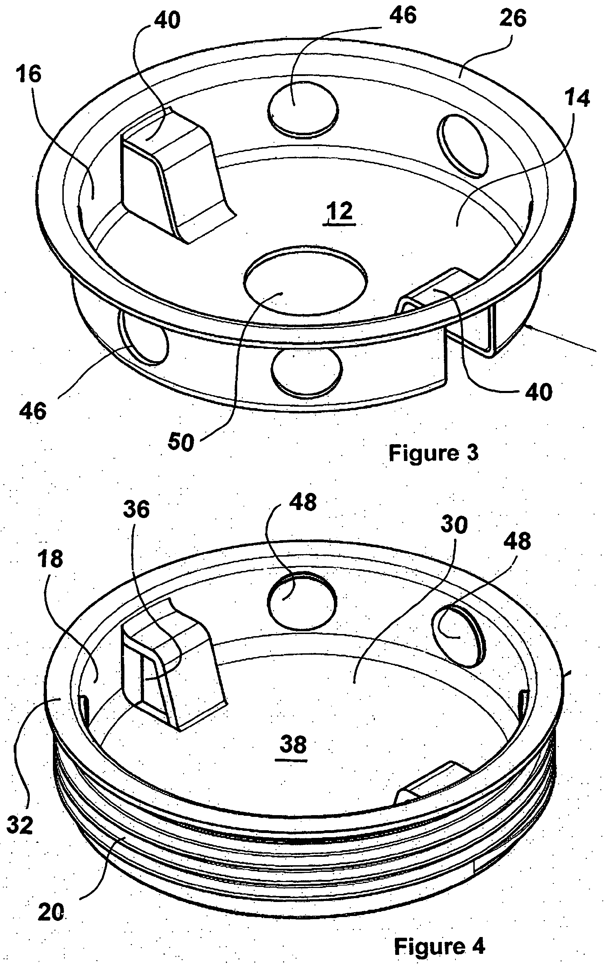

Zum besseren Verständnis ist in Figur 3 noch einmal separat der metallische napfförmige Grundkörper 12 dargestellt. An den scheibenförmigen Boden 14 schließt sich außenseitig ein hochstehendes rohrförmiges Ringteil 16 an, das auf der Oberseite mit einem oberen Flanschrand 26 endet. Aus dem Ringteil 16 und dem Boden 14 sind zwei sich diametral gegenüberliegende Blechlaschen 40 als integrierte Formschlußelemente für den Ansatz eines Werkzeugschlüssels nach innen in den Metallnapf eingeformt.

In der Mitte des scheibenförmigen Bodens 14 kann zentral eine Bohrung 50 vorgesehen sein, ggfs. für den Einsatz einer besonderen Entgasungs- oder Belüftungseinrichtung. Im Normalfall ist diese Bohrung 50 von unten durch das in Figur 4 separat dargestellte napfförmige Kunststoffteil 38 abgedeckt und abgedichtet. Das napfförmige Kunststoffteil 38 kann in einer entsprechenden Spritzgußform direkt auf den als Einlegeteil eingesetzten metallischen Grundkörper 12 aufgespritzt oder in einer einfachen Spritzgußform separat als Einzelteil vorgefertigt werden. Dann wird das vorgefertigte napfförmige Kunststoffteil 38 über den metallischen Grundkörper 12 übergestülpt und aufgepreßt, so daß die nach innen weisenden runden Formschluß-Vorsprünge 48 von außen in die entsprechenden runden Formschluß-Aussparungen 46 (z. B. Bohrungen oder Ausstanzungen) in dem rohrförmigen Ringteil 16 des metallischen Grundkörpers 12 formschlüssig und fest einrasten. Gleichzeitig schnappen die integrierten Hinterfüllungen 36 des napfförmigen Kunststoffteils 38 in die beiden Ausformungen hinter den Blechlaschen 40 ein und verrasten dort. Durch diese vorteilhafte Ausgestaltung und Verbindung von Kunststoffnapf und metallischem Grundkörper wird erreicht, daß die zum festen Ein- und Ausschrauben der Spundverschlüsse erforderlichen Drehmomente in hervorragender Weise - genau an der Stelle wo sie gebraucht werden - auf das äußere Gewinde 20 der rohrförmigen Kunststoffschicht 18 übertragen werden. Ein ungewolltes Verrutschen oder Verdrehen des metallischen Grundkörpers innerhalb des napfförmigen Kunststoffteils ist damit ausgeschlossen.

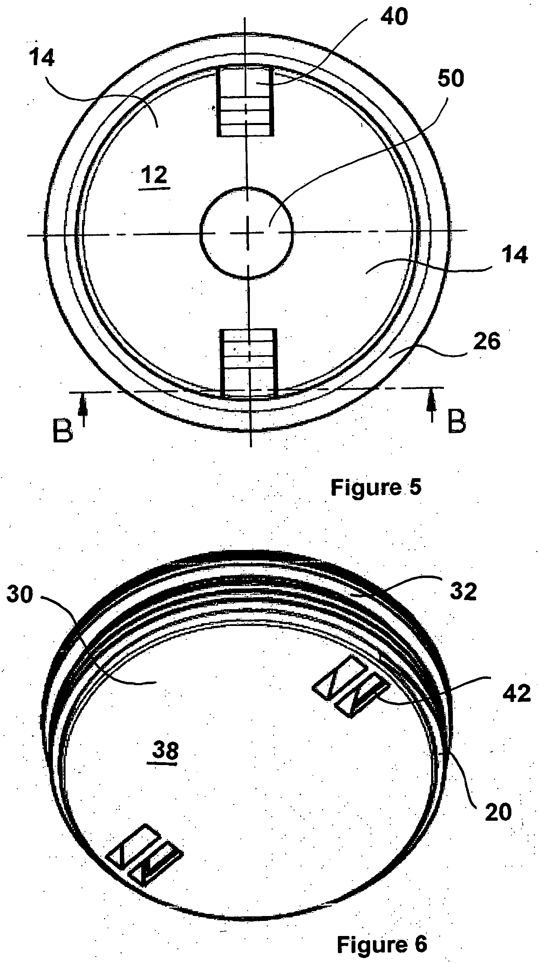

In Figur 5 ist noch einmal eine Draufsicht auf den metallischen Grundkörper 12 gezeigt. Es ist erkennbar, daß die Blechlaschen 40 zur Mitte hin fest an dem scheibenförmigen Boden 14 und zum Rand hin fest mit dem rohrförmigen Ringteil 16 bzw. dem oberen Flanschrand 26 verbunden sind, so daß sie ein stabiles und festes Widerlager für den Einsatz eines Schraubwerkzeuges wie z. B. einen Drehmomenten-Schlüssel bieten.

Figur 6 zeigt das äußere napfförmige Kunststoffteil 38 in einer perspektivischen Ansicht von unten. Es sind die sich diametral gegenüberliegenden integrierten Hinterfüllungen bzw. zwei nebeneinander liegende Aussparungen mit seitlichen Vorsprüngen als Schnapp-Rast-Verbindung 42 in den Ausnehmungen der Blechlaschen 40 des metallischen Grundkörpers 12 erkennbar. Diese Aussparungen müssen nicht unbedingt realisiert sein, sie sind hier lediglich zum Zweck der Materialeinsparung von Kunststoffmaterial und verminderter Schrumpfung vorgesehen. Bei dieser Ausführung des napfförmigen Kunststoffteils 38 ist am oberen Ende des Außengewindes 20 eine integrierte mitangespritzte Dichtungslippe 32 (Dichtungsring) vorgesehen.

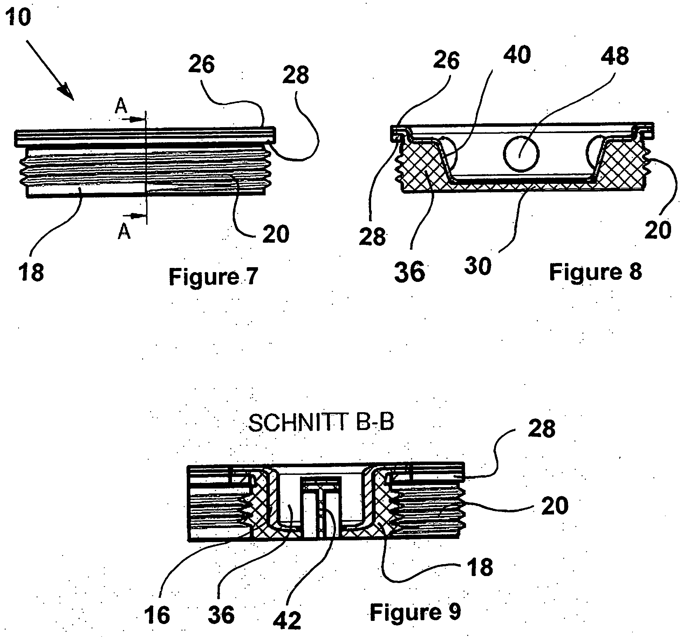

Figur 7 zeigt den Spundstopfen 10 in Seitenansicht mit separatem Dichtungsring 28. Eine Querschnittsdarstellung entlang der Schnittlinie A-A ist in Figur 8 dargestellt. Dabei verläuft der Schnitt genau durch die Hinterfüllungen 36 des napfförmigen Kunststoffteils 38 mit scheibenförmiger Kunststoffschicht 30. Figur 9 zeigt schließlich einen Teilausschnitt des Spundverschlusses gemäß Schnittlinie B-B (in Fig. 5) durch das rohrförmige Ringteil 16 des metallischen Grundkörpers und der rohrförmigen Kunststoffschicht 18 mit Außengewinde 20 des napfförmigen Kunststoffteils. In der integrierten Hinterfüllung 36 sind die Aussparungen zur Materialeinsparung erkennbar. Die Hinterfüllung besitzen seitliche Vorsprünge für die Schnapp-Rast-Verbindung 42 mit dem metallischen Grundkörper.

In vorteilhafter Weise kann mit der bevorzugten Ausführungsform die Version mit separat vorgefertigtem Kunststoff-Napf am besten realisiert werden. Die Formschlußverbindungen auf der Innenseite des Außengewindes gewährleisten einen sicheren Halt auf dem metallischen Grundkörper und die außenseitig formschlüssig in den metallischen Grundkörper zapfenartig eingreifenden Kunststoff-Vorsprünge 48 übertragen an direkter Stelle hinter dem Kunststoff-Gewinde 20 größte Drehmomente für ein sicheres und festes Ein- und Ausschrauben der erfindungsgemäßen Composite-Spundverschlüsse. Die erfindungsgemäßen Spundverschlüsse können in allen Größen wie z. B. 2 Zoll, 3 Zoll und 3/4tel Zoll (2"-Verschlüsse S 70x6 mm, ¾"-Verschlüsse S 38x6 mm, sowie 2"-Verschlüsse S 56x4 mm gem. VCI-Standard) oder (2-inch buttress, BCS 56x4 oder jetzt ISO G2 x 11.5 (2" NPS) mit Grob- oder Feingewinde gefertigt werden.

### Bezugsziffernliste

- **10**: Spundverschluß
- **12**: Grundkörper aus Metall (10)
- **14**: scheibenförmiger Boden (12)
- **16**: rohrförmiges Ringteil (12)
- **18**: rohrförmige Kunststoffschicht (16)
- **20**: Außengewinde (18)
- **22**: Formschlußelement (14)
- **24**: Formschluß-Bogen (22)
- **26**: oberer Flanschrand (16)
- **28**: Dichtungsring (optional)
- **30**: scheibenförmige Kunststoffschicht (12)
- **32**: mitangespritzte Dichtungslippe (20)
- **34**: integriertes Formschlußelement
- **36**: integrierte Hinterfüllung (30)
- **38**: napfförmiges Kunststoffteil
- **40**: Blechlasche (14/16)
- **42**: Schnapp/Rast-Verbindung)
- **44**: Kunststoff-Vorsprünge (18, 30)
- **46**: Formschluß-Aussparungen
- **48**: Formschluß-Vorsprünge
- **50**: Zentral-Ausnehmung (Bohrung)

## Patentansprüche

1. Spundverschluss (10) zum gas- und flüssigkeitsdichten Verschließen einer Spundöffnung mit Innengewinde eines Behälters, insbesondere eines Stahlfasses zur Lagerung und zum Transport von insbesondere gefährlichen flüssigen Füllgütern, in Fond eines napfförmigen Grundkörpers (12) aus Metall mit einem scheibenförmigen Boden (14) und einem sich daran anschließenden, nach oben offenen rohrförmigen Ringteil (16), an dem außenseitig ein Außengewinde (20) vorgesehen ist, wobei innerhalb des napfförmigen Grundkörpers (12) wenigstens ein Formschlusselement (22) in Gestalt eines geformten Blechstreifens oder einer Lasche vorgesehen ist zum Ansetzen eines Schraubwerkzeugs zum Ein- und Ausschrauben des
Spundverschlusses in die Spundöffnung des Behälters,
**dadurch gekennzeichnet, dass**
auf der gewindelosen Außenseite des Ringteiles (16) eine stabile Kunststoffschicht (18) vorgesehen ist, in welche - zum Einschrauben des Spundverschlusses (10) in das Innengewinde der Spundöffnung - ein entsprechendes Außengewinde (20) von außen eingeformt ist.

2. Spundverschluss (10) nach Anspruch 1,
**dadurch gekennzeichnet, dass**
auf die gesamte Außenfläche des napfförmigen Grundkörpers (12) (= Metallrohling) mit dem scheibenförmigen Boden (14) und dem rohrförmigen Ringteil (16) eine durchgehende dichte Kunststoffschicht (18) aufgetragen ist, in welche auf der Außenseite des Ringteiles (16) das Außengewinde (20) von außen eingeformt ist.

3. Spundverschluss (10) nach Anspruch 1 oder 2,
**gekennzeichnet durch**,
eine zweiteilige napfförmigen Ausbildung, bei der ein oberes, nicht mit dem Füllgut in Kontakt kommendes napfförmiges Teil (12) aus Metall (= Metallrohling), vorzugsweise Stahl, und ein unteres, mit dem Füllgut in Kontakt kommendes napfförmiges Teil aus Kunststoff (18) besteht.

4. Spundverschluss (10) nach Anspruch 1, 2 oder 3,
**dadurch gekennzeichnet, dass**
innerhalb des napfförmigen Grundkörpers (12) auf der Außenseite des scheibenförmigen Bodens (14) ein Formschlusselement (22) in Gestalt eines Blechstreifens mit außenseitigen Formschluss-Bögen (24) aufgeschweißt ist.

5. Spundverschluss (10) nach Anspruch 1, 2, 3 oder 4,
**dadurch gekennzeichnet, dass**
die durchgehende stabile Kunststoffschicht (18) mit Außengewinde (20) außenseitig auf die gesamte Außenfläche des napfförmigen metallischen Grundkörpers (12) mit dem scheibenförmigen Boden (14) und dem rohrförmigen Ringteil (16) aufgespritzt ist.

6. Spundverschluss (10) nach Anspruch 5,
**dadurch gekennzeichnet, dass**
wenigstens das rohrförmige Ringteil (14) des metallischen Grundkörpers (12) außenseitig auf der Kontaktfläche zu der äußeren Kunststoffschicht (18) mit einer aufgerauten Oberfläche versehen ist, wodurch die aufgespritzte Kunststoffschicht (18) eine kraft- und formschlussartige Verbindung mit der Metalloberfläche eingeht.

7. Spundverschluss (10) nach einem der vorhergehenden Ansprüche 1 bis 6,
**dadurch gekennzeichnet, dass**
auf den napfförmigen Grundkörper (12) aus Metall mit scheibenförmigem Boden (14), mit dem sich daran anschließenden, nach oben offenen rohrförmigen Ringteil (16) und darin integrierten Formschlusselementen (34) ein dazu passendes, im Spritzguss-Verfahren vorgefertigtes, napfförmiges Kunststoffteil (38) mit scheibenförmigem Boden (30) und sich daran anschließenden, nach oben offenen rohrförmigen Ringteil (18) mit Außengewinde (20) übergestülpt und über eine Schnapp/Rast -Verbindung (42) mit entsprechenden Hinterschnitten unlösbar fest darauf eingerastet und verbunden ist.

8. Spundverschluss (10) nach einem der vorhergehenden Ansprüche 1 bis 7,
**dadurch gekennzeichnet, dass**
in der äußeren Kunststoffschicht (18) oberhalb des Außengewindes (20) und direkt unterhalb eines oberen Flanschrandes (26) des metallischen Grundkörpers (12) ein umlaufender Dichtungssitz zum Einsetzen eines separaten Dichtungsringes ausgebildet ist

9. Spundverschluss (10) nach einem der vorhergehenden Ansprüche 1 bis 7,
**dadurch gekennzeichnet, dass**
die äußere Kunststoffschicht (18) oberhalb des Außengewindes (20) und direkt unterhalb des oberen Flanschrandes (26) des metallischen Grundkörpers (12) eine integrierte mit angespritzte Dichtungslippe (32) aufweist.

10. Spundverschluss (10) nach Anspruch 9,
**dadurch gekennzeichnet, dass**
die mit angespritzte Dichtungslippe (32) aus einem anderen Kunststoffmaterial als die Kunststoffschicht (18) aus Basis-Kunststoff besteht und im Zwei-Komponenten-Spritzverfahren ausgebildet ist.

11. Spundverschluss (10) nach einem der vorhergehenden Ansprüche 1 bis 9,
**dadurch gekennzeichnet, dass**
innerhalb des napfförmigen metallischen Grundkörpers (12) an wenigstens zwei sich diametral gegenüberliegenden Seiten aus dem scheibenförmigen Boden (14) oder/und aus dem rohrförmigen Ringteil (16) jeweils ein integriertes Formschlusselement (34) in Gestalt eines gebogenen, nach oben hochstehenden Blechstreifens ausgeformt ist.

12. Spundverschluss (10) nach Anspruch 11,
**dadurch gekennzeichnet, dass**
die integrierten Formschlusselemente (34) in Richtung des rohrförmigen Ringteiles (16) hin zumindest teilweise mit Kunststoff abstützend hinterlegt sind, wobei diese Hinterfüllung (36) ein integriertes Teil der durchgehenden dichten Kunststoffschicht (30) unterhalb des scheibenförmigen Bodens (14) ist.

13. Spundverschluss (10) nach einem der vorhergehenden Ansprüche 1 bis 12,
**dadurch gekennzeichnet, dass**
innerhalb des napfförmigen metallischen Grundkörpers (12) an wenigstens zwei sich diametral gegenüberliegenden Seiten aus dem rohrförmigen Ringteil (16) und teilweise aus dem scheibenförmigen Boden (14) jeweils ein integriertes Formschlusselement (34) in Gestalt einer nach innen gebogenen Blechlasche (40) ausgeformt ist, die an ihrem oberen Ende fest mit dem rohrförmigen Ringteil (16) oder dem oberen Flanschrand (26) und an ihrem unteren Ende fest mit dem scheibenförmigen Boden (14) verbunden ist.

14. Spundverschluss (10) nach einem der vorhergehenden Ansprüche 1 bis 13,
**dadurch gekennzeichnet, dass**
auf der Innenseite der Kunststoffschicht (18) - etwa dem Außengewinde (20) gegenüberliegend an wenigstens zwei sich diametral gegenüberliegenden Seiten ein in die Kunststoffschicht (18) integrierter zapfenartiger Kunststoff- Vorsprung (44) ausgebildet ist, der passgenau von außen in die Aussparungen in dem Ringteil (16) und ggfs. teilweise in dem scheibenförmigen Boden (14), die durch das Ausformen der nach innen gebogenen Blechlaschen (40) gebildet sind, formschlüssig eingreift.

15. Verfahren zur Herstellung eines zweiteiligen Spundverschlusses zum gas- und flüssigkeitsdichten Verschließen der Spundöffnung eines Behälters, insbesondere eines Stahlfasses zur Lagerung und zum Transport von insbesondere gefährlichen flüssigen Füllgütern,
**dadurch gekennzeichnet, dass**
ein napfförmiger Grundkörper (= Rohling) aus Metall mit einem scheibenförmigen Boden und einem sich daran anschließenden, nach oben offenen rohrförmigen Ringteil in eine Spritzgussform eingesetzt wird, wonach eine Kunststoffschicht wenigstens auf die Außenseite des rohrförmigen Ringteiles fest aufgespritzt wird, wobei - durch entsprechende Formvorgabe auf der Innenseite der Spritzgussform - ein entsprechendes Außengewinde in die Kunststoffschicht eingeformt wird.

16. Verfahren zur Herstellung eines zweiteiligen Spundverschlusses zum gas- und flüssigkeitsdichten Verschließen der Spundöffnung eines Behälters, insbesondere eines Stahlfasses zur Lagerung und zum Transport von insbesondere gefährlichen flüssigen Füllgütern,
**dadurch gekennzeichnet, dass**
ein napfförmiger Grundkörper (= Rohling) aus Metall mit einem scheibenförmigen Boden, integrierten Formschlusselementen und einem sich daran anschließenden, nach oben offenen rohrförmigen Ringteil vorgeformt wird und danach ein dazu passendes napfförmiges Kunststoffteil mit scheibenförmigem Boden und einem sich daran anschließenden, nach oben offenen rohrförmigen Ringteil mit Außengewinde in einer Spritzgussform vorgefertigt wird, wonach das napfförmige Kunststoffteil über den napfförmigen Metall-Grundkörper gestülpt und über eine Schnapp/ Rast-Verbindung mit entsprechenden Hinterschnitten unlösbar fest eingerastet und verbunden wird.

## Claims

1. Bung closure (10) for the gas-tight and liquid-tight closure of a bung opening with an internal thread of a container, in particular a steel drum for storing and for transporting in particular hazardous liquid charges, in the form of a cup-shaped basic body (12) made from metal, with a disk-shaped base (14) and an adjoining, upwardly open, tubular ring part (16), on the outer side of which an external thread (20) is provided, wherein at least one interlocking element (22) in the form of a shaped sheet-metal strip or a tab is provided within the cup-shaped basic body (12) for the fitting of a screwing tool for screwing the bung closure into, and unscrewing same from, the bung opening of the container,
**characterized in that**
a stable plastics layer (18) in which a corresponding external thread (20) is formed from the outside - for screwing the bung closure (10) into the internal thread of the bung opening is provided on the threadless outer side of the ring part (16).

2. Bung closure (10) according to Claim 1,
**characterized in that**
a continuous, leakproof plastics layer (18) in which the external thread (20) on the outer side of the ring part (16) is formed from the outside is applied to the entire outer surface of the cup-shaped basic body (12) (= metal blank) with the disk-shaped base (14) and the tubular ring part (16).

3. Bung closure (10) according to Claim 1 or 2,
**characterized by**
a two-part cup-shaped design, in which an upper cup-shaped part (12) not coming into contact with the charge is composed of metal (= metal blank), preferably steel, and a lower cup-shaped part coming into contact with the charge is composed of plastic (18).

4. Bung closure (10) according to Claim 1, 2 or 3,
**characterized in that**
an interlocking element (22) in the form of a sheet-metal strip with interlocking arcs (24) on the outer side is welded onto the outer side of the disk-shaped base (14) within the cup-shaped basic body (12).

5. Bung closure (10) according to Claim 1, 2, 3 or 4,
**characterized in that**
the continuous, stable plastics layer (18) with the external thread (20) on the outer side is sprayed onto the entire outer surface of the cup-shaped metallic basic body (12) with the disk-shaped base (14) and the tubular ring part (16).

6. Bung closure (10) according to Claim 5,
**characterized in that**
at least the tubular ring part (14) of the metallic basic body (12) is provided with a roughened surface on the outer side, on the contact surface with the outer plastics layer (18), as a result of which the sprayed-on plastics layer (18) enters into a frictional- and interlocking-type connection with the metal surface.

7. Bung closure (10) according to one of the preceding Claims 1 to 6,
**characterized in that**
onto the cup-shaped basic body (12) made from metal, with the disk-shaped base (14), with the adjoining, upwardly open, tubular ring part (16) and the interlocking elements (34) integrated therein, a cup-shaped plastics part (38) which is matched thereto, is premanufactured by injection molding and has a disk-shaped base (30) and an adjoining, upwardly open, tubular ring part (18) with an external thread (20) is pulled and is nonreleasably fixedly latched thereon and connected to corresponding undercuts via a snap-on/latching connection (42).

8. Bung closure (10) according to one of the preceding Claims 1 to 7,
**characterized in that**
a peripheral sealing seat for the insertion of a separate sealing ring is formed in the outer plastics layer (18) above the external thread (20) and directly below an upper flange edge (26) of the metallic basic body (12).

9. Bung closure (10) according to one of the preceding Claims 1 to 7,
**characterized in that**
the outer plastics layer (18) has an integrated sealing lip (32), which is also injection-molded on, above the external thread (20) and directly below the upper flange edge (26) of the metallic basic body (12).

10. Bung closure (10) according to Claim 9,
**characterized in that**
the sealing lip (32), which is also injection-molded on, is composed of a different plastics material than the plastics layer (18) made from basic plastic, and is formed by two-component injection molding.

11. Bung closure (10) according to one of the preceding Claims 1 to 9,
**characterized in that**
a respective integrated interlocking element (34) in the form of a curved, upwardly protruding sheet-metal strip is formed from the disk-shaped base (14) and/or from the tubular ring part (16) on at least two diametrically opposite sides within the cup-shaped metallic basic body (12).

12. Bung closure (10) according to Claim 11,
**characterized in that**
the integrated interlocking elements (34) are at least partially backed in a supporting manner with plastic in the direction of the tubular ring part (16), wherein said rear filling (36) is an integrated part of the continuous, leakproof plastics layer (30) below the disk-shaped base (14).

13. Bung closure (10) according to one of the preceding Claims 1 to 12,
**characterized in that**
a respective integrated interlocking element (34) in the form of an inwardly curved sheet-metal tab (40) is formed from the tubular ring part (16) and partially from the disk-shaped base (14) on at least two diametrically opposite sides within the cup-shaped metallic basic body (12), said sheet-metal tab being connected fixedly at its upper end to the tubular ring part (16) or to the upper flange edge (26) and being fixedly connected at its lower end to the disk-shaped base (14).

14. Bung closure (10) according to one of the preceding Claims 1 to 13,
**characterized in that**
a pin-like plastics projection (44) which is integrated into the plastics layer (18) is formed on at least two diametrically opposite sides on the inner side of the plastics layer (18) - approximately opposite the external thread (20), said plastics projection engaging in an interlocking manner from the outside with a precise fit into the cutouts in the ring part (16) and optionally partially in the disk-shaped base (14), which cutouts are formed by the formation of the inwardly curved sheet-metal tabs (40).

15. Method for producing a two-part bung closure for the gas-tight and liquid-tight closure of the bung opening of a container, in particular a steel drum for storing and for transporting in particular hazardous liquid charges,
**characterized in that**
a cup-shaped basic body (= blank) made from metal, with a disk-shaped base and an adjoining, upwardly open, tubular ring part is inserted into an injection mold, after which a plastics layer is permanently sprayed at least onto the outer side of the tubular ring part, wherein - by corresponding predetermination of the shape on the inside of the injection mold - a corresponding external thread is formed in the plastics layer.

16. Method for producing a two-part bung closure for the gas-tight and liquid-tight closure of the bung opening of a container, in particular a steel drum for storing and for transporting in particular hazardous liquid charges,
**characterized in that**
a cup-shaped basic body (= blank) made from metal, with a disk-shaped base, integrated interlocking elements and an adjoining, upwardly open, tubular ring part is preformed and then a cup-shaped plastics part which is matched thereto and has a disk-shaped base and an adjoining, upwardly open, tubular ring part with an external thread is premanufactured in an injection mold, after which the cup-shaped plastics part is pulled over the cup-shaped metal basic body and is nonreleasably fixedly latched and connected to corresponding undercuts via a snap-on/latching connection.

## Revendications

1. Bonde métallique (10) servant à fermer de manière étanche aux gaz et aux liquides une ouverture de bonde d'un récipient dotée d'un filet intérieur, en particulier d'un récipient en acier servant à l'entreposage et au transport de produits liquides, en particulier de produits liquides dangereux,
la bonde présentant la forme d'un corps métallique de base (12) en forme de godet, doté d'un fond (14) en forme de disque auquel se raccorde une partie annulaire (16) ouverte dans le haut et sur le côté extérieur de laquelle est prévu un filet extérieur (20),
au moins un élément (22) de mise en correspondance géométrique étant prévu à l'intérieur du corps de base (12) en forme de godet et présentant la forme d'un ruban de tôle ou d'une patte permettant de placer un outil de vissage en vue de visser et de dévisser la bonde de fermeture dans l'ouverture de bonde du récipient,
**caractérisée en ce que**
sur le côté extérieur non fileté de la partie annulaire (16) est prévue une couche stable (18) en matière synthétique dans laquelle un filet extérieur (20) correspondant est formé depuis l'extérieur pour le vissage de la bonde de fermeture (10) dans le filet intérieur de l'ouverture de bonde.

2. Bonde de fermeture (10) selon la revendication 1, **caractérisée en ce qu'**une couche continue étanche (18) de matière synthétique dans laquelle le filet extérieur (20) est formé depuis l'extérieur sur le côté extérieur de la partie annulaire (16) est appliqué sur la totalité de la surface extérieure du corps de base (12) en forme de godet (= ébauche métallique) présentant le fond (14) en forme de disque et la partie tubulaire annulaire (16).

3. Bonde de fermeture (10) selon les revendications 1 ou 2, **caractérisée par** une configuration du godet en deux pièces, avec une partie supérieure (12) en forme de godet en métal, n'entrant pas en contact avec le produit de remplissage (= ébauche métallique), de préférence en acier, et une partie inférieure en forme de godet, en matière synthétique (18), entrant en contact avec le produit de remplissage.

4. Bonde de fermeture (10) selon les revendications 1, 2 ou 3, **caractérisée en ce qu'**un élément (22) de mise en correspondance géométrique qui présente la forme d'un ruban de tôle doté d'un arc extérieur (24) de mise en correspondance géométrique est soudé à l'intérieur du corps de base (12) en forme de godet, sur le côté extérieur du fond (14) en forme de disque.

5. Bonde de fermeture (10) selon les revendications 1, 2, 3 ou 4, **caractérisée en ce que** la couche stable continue (18) de matière synthétique présentant le filet extérieur (20) est moulée par injection sur le côté extérieur de la totalité de la surface extérieure du corps de base métallique (12) en forme de godet présentant le fond (14) en forme de disque et la partie tubulaire annulaire (16).

6. Bonde de fermeture (10) selon la revendication 5, **caractérisée en ce que** sur la surface de contact avec la couche extérieure (18) en matière synthétique, au moins la partie tubulaire annulaire (14) du corps de base métallique (12) est dotée sur son côté extérieur d'une surface rugueuse, grâce à quoi la couche (18) de matière synthétique moulée par injection entre en liaison en correspondance mécanique et en correspondance géométrique avec la surface métallique.

7. Bonde de fermeture (10) selon l'une des revendications 1 à 6 qui précèdent, **caractérisée en ce que** sur le corps métallique de base (12) en forme de godet présentant le fond (14) en forme de disque auquel se raccorde la partie tubulaire annulaire (16) ouverte vers le haut et dans lequel sont intégrés des éléments (34) de mise en correspondance géométrique, une partie (38) en matière synthétique, en forme de godet, préfabriquée par une opération de moulage par injection et présentant un fond (30) en forme de disque auquel se raccorde une partie tubulaire annulaire (18) ouverte vers le haut, dotée d'un filet extérieur (20), est passée par dessus, encliquetée et reliée fermement de manière non libérable par l'intermédiaire d'une liaison rapide encliquetable (42) dotée de contre-dépouilles appropriées.

8. Bonde de fermeture (10) selon l'une des revendications 1 à 7 qui précèdent, **caractérisée en ce qu'**au-dessus du filet extérieur (20) et directement en dessous d'un bord supérieur de bride (26) du corps de base métallique (12), un siège d'étanchéité périphérique permettant d'insérer une bague d'étanchéité séparée est formé dans la couche extérieure (18) en matière synthétique.

9. Bonde de fermeture (10) selon l'une des revendications 1 à 7 qui précèdent, **caractérisée en ce que** la couche extérieure (18) en matière synthétique présente au-dessus du filet extérieur (20) et directement en dessous du bord supérieur de bride (26) du corps de base métallique (12) une lèvre d'étanchéité (32) qui lui est intégrée et moulée par injection.

10. Bonde de fermeture (10) selon la revendication 9, **caractérisée en ce que** la lèvre d'étanchéité (32) est constituée d'une autre matière synthétique que la couche (18) en matière synthétique de base et est formée par un procédé d'injection à deux composants.

11. Bonde de fermeture (10) selon l'une des revendications 1 à 9 qui précèdent, **caractérisée en ce qu'**un élément intégré (34) de mise en correspondance géométrique présentant la forme d'un ruban de tôle cintré et débordant vers le haut est formé à l'intérieur du corps de base métallique (12) en forme de godet, sur au moins deux côtés diamétralement opposés, à partir du fond (14) en forme de disque et/ou à partir de la pièce tubulaire annulaire (16).

12. Bonde de fermeture (10) selon la revendication 11, **caractérisée en ce que** les éléments intégrés (34) de mise en correspondance géométrique sont recouverts au moins en partie de matière synthétique de soutien en direction de la pièce tubulaire annulaire (16), ce remplissage (36) étant partie intégrante de la couche (30) en matière synthétique étanche et continue en dessous du fond (14) en forme de disque.

13. Bonde de fermeture (10) selon l'une des revendications 1 à 12 qui précèdent, **caractérisée en ce qu'**à l'intérieur du corps de base métallique (12) en forme de godet, sur au moins deux côtés diamétralement opposés, un élément (34) intégré de mise en correspondance géométrique qui présente la forme d'une patte en tôle (40) rabattue vers l'intérieur, raccordé à son extrémité supérieure de manière solidaire à la pièce tubulaire annulaire (16) ou au bord supérieur (26) de bride et à son extrémité inférieure au fond (14) en forme de disque est formé sur la pièce tubulaire annulaire (16) et partiellement sur le fond (14) en forme de disque.

14. Bonde de fermeture (10) selon l'une des revendications 1 à 13 qui précèdent, **caractérisée en ce que** sur le côté intérieur de la couche (18) en matière synthétique, sensiblement face au filet extérieur (20), sur au moins deux côtés diamétralement opposés, une saillie (44) en matière synthétique, en forme de tourillon, intégrée dans la couche (18) de matière synthétique est formée et s'engage de manière ajustée en correspondance géométrique par l'extérieur dans les découpes ménagées dans la pièce annulaire (16) et éventuellement en partie dans le fond (14) en forme de disque, formées par le façonnage des pattes en tôle (40) rabattues vers l'intérieur.

15. Procédé de fabrication d'une bonde de fermeture en deux pièces, pour la fermeture étanche aux gaz et aux liquides de l'ouverture de bonde d'un récipient, en particulier d'un fût en acier pour l'entreposage et le transport de produits liquides, en particulier dangereux,
**caractérisé en ce que**
un corps métallique de base en forme de godet (= ébauche), doté d'un fond en forme de disque auquel se raccorde une partie tubulaire annulaire ouverte vers le haut, est inséré dans un moule de moulage par injection, suite à quoi une couche en matière synthétique est injectée solidairement au moins sur le côté extérieur de la pièce tubulaire annulaire, et par façonnage approprié du côté intérieur du moule de moulage par injection, un filet extérieur correspondant est formé dans la couche de matière synthétique.

16. Procédé de fabrication d'une bonde de fermeture en deux pièces, pour la fermeture étanche aux gaz et aux liquides de l'ouverture de bonde d'un récipient, en particulier d'un fût en acier pour l'entreposage et le transport de produits liquides, en particulier dangereux,
**caractérisé en ce que**
un corps métallique de base en forme de godet (= ébauche), avec un fond en forme de disque, des éléments intégrés de mise en correspondance géométrique et une pièce tubulaire annulaire qui s'y raccorde, ouverte vers le haut est préformé et ensuite une pièce en matière synthétique en forme de godet qui y est adaptée, avec fond en forme de disque auquel se raccorde une pièce tubulaire annulaire ouverte vers le haut et dotée d'un filet extérieur, est préfabriquée dans un moule de moulage par injection, suite à quoi la pièce en matière synthétique en forme de godet est enfichée au-dessus du corps de base métallique en forme de godet et est encliquetée et reliée solidairement de manière non libérable par une liaison rapide encliquetable dotée de contre-dépouilles correspondantes.
